# EUROPÄISCHE PATENTSCHRIFT

(11) **EP 3 613 684 B1**
(45) Veröffentlichungstag und Bekanntmachung des Hinweises auf die Patenterteilung: **31.05.2023**
(21) Anmeldenummer: 19191098.3
(22) Anmeldetag: 09.08.2019
(51) Int. Cl.: B65G 69/28

(54) **BETRIEBSVERFAHREN ZUM BETREIBEN EINER LADEBRÜCKENANORDNUNG**
OPERATING METHOD FOR OPERATING A CHARGING BRIDGE ARRANGEMENT
PROCÉDÉ DE FONCTIONNEMENT POUR FAIRE FONCTIONNER UN SYSTÈME DE PONT DE CHARGEMENT

(30) Priorität: 21.08.2018 DE 102018120354; 13.11.2018 DE 102018128396
(43) Veröffentlichungstag der Anmeldung: 26.02.2020
(73) Patentinhaber: Hörmann KG Antriebstechnik, 33803 Steinhagen (DE)
(72) Erfinder: KÖPPLER, Thorsten, 33619 Bielefeld (DE)
(74) Vertreter: KASTEL Patentanwälte PartG mbB

(56) Entgegenhaltungen:
- DE-A1-102012 110 292
- US-A1- 2006 051 196
- US-A1- 2017 043 967
- US-B1- 6 329 931

## Beschreibung

Die Erfindung betrifft Betriebsverfahren zum Betreiben einer Ladebrückenanordnung.

Ladebrückenanordnungen sind als solche beispielsweise aus der Firmendruckschrift "Verladetechnik" mit dem Druckvermerk: Stand 02.2015 / Druck 02.2015 / HF 86278 DE / PDF bekannt.

Im Zuge zunehmender logistischer Herausforderungen durch stete Zunahme des (verbraucherorientierten) Versandhandels, der weiteren Spezialisierung und Verzweigung von Just-in-Time-Lieferketten und steigenden Anforderungen an Energieeffizienz von Verladezentren gibt es einen Bedarf für die Beschleunigung der Verladevorgänge. Eine Idee ist es, bei den Ladebrückenanordnungen für Verladeeinrichtungen anzusetzen. Dabei sollte beachtet werden, dass die Ladebrückenanordnungen bewegliche Teile, namentlich Torblatt und Ladebrücke, aufweisen, an die bestimmte Sicherheitsanforderungen gestellt werden, um Verletzungen von Personen bei der Betätigung der Ladebrückenanordnungen zu verhindern.

US 6 329 931 B1 offenbart ein Betriebsverfahren zum Betreiben einer Ladebrückenanordnung, wobei die Ladebrückenanordnung eine Steuereinrichtung, eine zwischen einer Schließstellung und einer Offenstellung bewegbare Toreinrichtung und eine Grundstellung und eine Ladebrückenmaximalverstellhöhe aufweisende Ladebrückeneinrichtung aufweist, wobei in Abhängigkeit von einem von der Steuereinrichtung empfangenen Betätigungssignal eine erste und eine zweite Gruppe von Schritten durchgeführt wird, die ein Ansteuern der Ladebrückeneinrichtung durch die Steuereinrichtung als Reaktion auf ein Betätigungssignal umfasst.

Die erste Gruppe umfasst folgende Schritte:
aa) Ansteuern der Ladebrückeneinrichtung durch die Steuereinrichtung als Reaktion auf das Betätigungssignal, die Ladebrückeneinrichtung in Richtung der Grundstellung zu fahren;
ab) Detektieren der Grundstellungsposition der Ladebrückeneinrichtung;
ac) Ansteuern der Toreinrichtung durch die Steuereinrichtung derart, dass die Toreinrichtung in Richtung der Schließstellung fährt, sobald die Ladebrückeneinrichtung die Grundstellung erreicht hat.

Die zweite Gruppe umfasst folgende Schritte:
ba) Ansteuern der Toreinrichtung durch die Steuereinrichtung als Reaktion auf ein Betätigungssignal;
bb) Freigeben der Ladebrückeneinrichtung zur manuellen Steuerung durch die Steuereinrichtung, wenn die Toreinrichtung der Offenstellung erreicht hat.

US 2006 / 051 196 A1 offenbart ein Betriebsverfahren zum Betreiben einer Ladebrückenanordnung, wobei die Ladebrückenanordnung eine Steuereinrichtung, eine zwischen einer Schließstellung und einer Offenstellung bewegbare Toreinrichtung und eine Grundstellung und eine Ladebrückenmaximalverstellhöhe aufweisende Ladebrückeneinrichtung aufweist, wobei in Abhängigkeit von einem von der Steuereinrichtung empfangenen Betätigungssignal eine zweite Gruppe von Schritten durchgeführt wird, die ein Ansteuern der Toreinrichtung durch die Steuereinrichtung als Reaktion auf das Betätigungssignal umfasst, sodass die Toreinrichtung in Richtung der Offenstellung fährt.

Weitere Betriebsverfahren sind aus De 10 2012 110 292 A1 und US 2017 / 043 967 A1 bekannt.

Der Erfindung liegt die Aufgabe zugrunde Ladebrückenanordnungen, insbesondere hinsichtlich ihrer Nutzungsfreundlichkeit und -geschwindigkeit bei gleichzeitigem Erhalt des Sicherheitsniveaus, zu verbessern.

Die Aufgabe wird durch den Gegenstand der unabhängigen Ansprüche gelöst. Bevorzugte Weiterbildungen sind Gegenstand der abhängigen Ansprüche.

Die Erfindung schafft ein Betriebsverfahren zum Betreiben einer Ladebrückenanordnung, wobei die Ladebrückenanordnung eine Steuereinrichtung, eine zwischen einer Schließstellung und einer Offenstellung bewegbare Toreinrichtung und eine eine Grundstellung und eine Ladebrückenmaximalverstellhöhe aufweisende Ladebrückeneinrichtung aufweist, wobei in Abhängigkeit von einem von der Steuereinrichtung empfangenen ersten Betätigungssignal eine erste Gruppe von Schritten durchgeführt wird, wobei in Abhängigkeit von einem von der Steuereinrichtung (50) empfangenen zweiten Betätigungssignal, die Toreinrichtung (20) in Richtung der Offenstellung zu fahren, eine zweite Gruppe von Schritten durchgeführt wird, wobei die erste Gruppe folgende Schritte umfasst:
aa) Ansteuern der Ladebrückeneinrichtung durch die Steuereinrichtung als Reaktion auf das erste Betätigungssignal, die Ladebrückeneinrichtung in Richtung der Grundstellung zu fahren;
ab) Ermitteln einer Schließvorgang-Torlaufzeit durch die Toreinrichtung für den Schließvorgang der Toreinrichtung;
ac) Ansteuern der Toreinrichtung durch die Steuereinrichtung basierend auf der ermittelten Schließvorgang-Torlaufzeit derart, dass die Toreinrichtung in Richtung der Schließstellung fährt und die Schließstellung frühestens erreicht, wenn die Ladebrückeneinrichtung die Grundstellung erreicht oder erreicht hat; wobei die zweite Gruppe folgende Schritte umfasst:
ba) Ansteuern der Toreinrichtung durch die Steuereinrichtung als Reaktion auf das zweite Betätigungssignal, die Toreinrichtung in Richtung der Offenstellung zu fahren;
bb) Ermitteln der Momentan-Torblattposition durch die Toreinrichtung und Freigeben der Ladebrückeneinrichtung zur manuellen Steuerung durch die Steuereinrichtung, wenn die ermittelte Momentan-Torblattposition die Ladebrückenmaximalverstellhöhe erreicht hat oder überschritten hat.

Es ist bevorzugt, dass die erste Gruppe von Schritten als Reaktion auf ein Schließsignal als erstes Betätigungssignal durchgeführt wird.

Es ist bevorzugt, dass die zweite Gruppe von Schritten als Reaktion auf ein Öffnungssignal als zweites Betätigungssignal durchgeführt wird.

Es ist bevorzugt, dass die Ladebrückeneinrichtung ein Informationssignal, das angibt, dass die Ladebrückeneinrichtung in die Grundstellung fährt, an die Steuereinrichtung übermittelt, woraufhin die Steuereinrichtung als Reaktion auf das Informationssignal den Schritt ab) veranlasst.

Es ist bevorzugt, dass Schritt ab) umfasst, dass die Toreinrichtung eine Momentan-Torblattposition ermittelt und basierend auf der Momentan-Torblattposition die Schließvorgang-Torlaufzeit ermittelt.

Es ist bevorzugt, dass Schritt ab) umfasst, dass die Toreinrichtung eine Momentan-Torblattposition ermittelt und basierend auf einem, insbesondere eingelernten, Torblattgeschwindigkeitsprofil die Schließvorgang-Torlaufzeit ermittelt.

Es ist bevorzugt, dass Schritt ac) umfasst, dass die Steuereinrichtung die Toreinrichtung derart ansteuert, dass die Toreinrichtung die Schließstellung frühestens erreicht, wenn die ermittelte Schließvorgang-Torlaufzeit abzüglich der Maximalfahrzeit, welche die Fahrzeit der Ladebrückeneinrichtung von der Ladebrückenmaximalverstellhöhe und/oder einer Ladebrückenminimalverstellhöhe in die Grundstellung angibt, verstrichen ist.

Es ist bevorzugt, dass Schritt ac) umfasst, dass die Steuereinrichtung die Toreinrichtung derart ansteuert, dass die Bewegungsgeschwindigkeit des Torblatts beim Schließen die Bewegungsgeschwindigkeit der Ladebrückeneinrichtung beim Bewegen in die Grundstellung nicht derart überschreitet, dass das Torblatt mit der Ladebrückeneinrichtung kollidiert. Die Bewegungsgeschwindigkeit des Torblatts kann größer als oder gleich sein zu der Bewegungsgeschwindigkeit der Ladebrückeneinrichtung.

Es ist bevorzugt, dass Schritt ac) umfasst, dass die Steuereinrichtung die Toreinrichtung derart ansteuert, dass die Bewegungsgeschwindigkeit des Torblatts beim Schließen die Bewegungsgeschwindigkeit der Ladebrückeneinrichtung beim Bewegen in die Grundstellung nicht derart überschreitet, dass das Torblatt mit der Ladebrückeneinrichtung kollidiert, wenn die Momentan-Torblattposition kleiner oder gleich der Ladebrückenmaximalverstellhöhe ist und/oder die Bewegungsrichtung der Ladebrückeneinrichtung parallel zu der Bewegungsrichtung des Torblatts ist. Die Bewegungsgeschwindigkeit des Torblatts kann größer als oder gleich sein zu der Bewegungsgeschwindigkeit der Ladebrückeneinrichtung.

Es ist bevorzugt, dass Schritt ac) umfasst, dass die Steuereinrichtung die Toreinrichtung derart ansteuert, dass die Bewegungsgeschwindigkeit des Torblatts beim Schließen größer oder gleich der Bewegungsgeschwindigkeit der Ladebrückeneinrichtung beim Bewegen in die Grundstellung ist, insbesondere auch dann, wenn die Momentan-Torblattposition kleiner oder gleich der Ladebrückenmaximalverstellhöhe ist und/oder die Bewegungsrichtung der Ladebrückeneinrichtung parallel zu der Bewegungsrichtung des Torblatts ist.

Es ist bevorzugt, dass Schritt ac) umfasst, dass die Steuereinrichtung die Toreinrichtung derart ansteuert, dass die Bewegungsgeschwindigkeit des Torblatts beim Schließen kleiner oder gleich der Bewegungsgeschwindigkeit der Ladebrückeneinrichtung beim Bewegen in die Grundstellung ist.

Es ist bevorzugt, dass Schritt ac) umfasst, dass die Steuereinrichtung die Toreinrichtung derart ansteuert, dass die Bewegungsgeschwindigkeit des Torblatts beim Schließen kleiner oder gleich der Bewegungsgeschwindigkeit der Ladebrückeneinrichtung beim Bewegen in die Grundstellung ist, wenn die Momentan-Torblattposition kleiner oder gleich der Ladebrückenmaximalverstellhöhe ist und/oder die Bewegungsrichtung der Ladebrückeneinrichtung parallel zu der Bewegungsrichtung des Torblatts ist.

Vorzugsweise umfasst das Betriebsverfahren den Schritt ad), bei dem als Reaktion auf das Erreichen der Grundstellung und/oder der Schließstellung, und/oder mit Erreichen der Grundstellung und/oder der Schließstellung, eine Ladebrückenanordnung-Dichtungseinrichtung deaktiviert wird.

Es ist bevorzugt, dass der Schritt ba) umfasst, dass als unmittelbare Reaktion auf das zweite Betätigungssignal eine Ladebrückenanordnung-Dichtungseinrichtung aktiviert wird.

Es ist bevorzugt, dass der Schritt ba) umfasst, dass nach einer vorgegebenen Verzögerung die Toreinrichtung veranlasst wird, in Richtung der Offenstellung zu fahren.

Es ist bevorzugt, dass der Schritt ba) umfasst, dass durch die Steuereinrichtung die Toreinrichtung veranlasst wird, in Richtung der Offenstellung zu fahren.

Es ist bevorzugt, dass der Schritt bb) umfasst, dass die Ladebrückeneinrichtung, zum Anheben freigegeben wird, wenn die ermittelte Momentan-Torblattposition die Ladebrückenmaximalverstellhöhe erreicht hat oder überschritten hat.

Es ist bevorzugt, dass der Schritt bb) umfasst, dass die Ladebrückeneinrichtung, lediglich zum Anheben freigegeben wird, wenn die ermittelte Momentan-Torblattposition die Ladebrückenmaximalverstellhöhe erreicht hat oder überschritten hat.

Es ist bevorzugt, dass der Schritt bb) umfasst, dass die Ladebrückeneinrichtung zum Ausfahren freigegeben wird, wenn die ermittelte Momentan-Torblattposition eine Mindestöffnungshöhe erreicht hat oder überschritten hat, die mehr beträgt als die Ladebrückenmaximalverstellhöhe.

Es ist bevorzugt, dass der Schritt bb) umfasst, dass die Ladebrückeneinrichtung, insbesondere zusätzlich zum Anheben zum Ausfahren freigegeben wird, wenn die ermittelte Momentan-Torblattposition eine Mindestöffnungshöhe erreicht hat oder überschritten hat, die mehr beträgt als die Ladebrückenmaximalverstellhöhe.

Es ist bevorzugt, dass der Schritt bb) umfasst, dass die Ladebrückeneinrichtung, insbesondere zusätzlich zum Anheben zum Ausfahren freigegeben wird, wenn die ermittelte Momentan-Torblattposition eine Mindestöffnungshöhe erreicht hat oder überschritten hat, wobei die Mindestöffnungshöhe derart gewählt ist, dass ein aufrechtstehender Nutzer freie Sicht durch die Toreinrichtung auf ein Ladeende hat.

Es ist bevorzugt, dass die Mindestöffnungshöhe mindestens 1 Meter mehr bis mindestens 2 Meter mehr beträgt als die Ladebrückenmaximalverstellhöhe.

Die Erfindung schafft eine Ladebrückenanordnung zum Bereitstellen eines Ladedocks für ein Kraftfahrzeug an einem Gebäude, mit den Merkmalen des Anspruchs 12.

An jeder Öffnung einer Gebäudehülle kann wertvolle Energie, beispielsweise in Form von Kälte oder Wärme, verlorengehen. Es wird vorgeschlagen den kompletten Ladezyklus an einem Ladedock bzw. Verladebereich zu verkürzen, sodass wertvolle Energie und Zeit eingespart werden kann.

Zu Beginn des Ladezyklus (also vor dem Ladevorgang) wird erst das Industrietor bzw. die Toreinrichtung komplett geöffnet bevor die Ladebrücke der Ladebrückeneinrichtung verfahren werden kann. Folgender Ablauf kann als sogenannter SEMI-START vorgesehen sein:
- Taste Dichtung wird an der Ladebrückensteuerung gedrückt
- Torabdichtung bläst auf und Ladebrückensteuerung sendet Auf-Befehl ans Tor
- Die Ladebrücke kann erst per Tastenbetätigung verfahren werden, wenn das Tor die Endlage oben erreicht hat (Freigabe durch das Tor)

Am Ende des Ladezyklus (also nach dem Ladevorgang) wird erst die Ladebrücke in Grundstellung gefahren, bevor das Industrietor geschlossen werden kann. Auch bei einer semi-automatischen Lösung kann ein solcher Ablauf durchgeführt werden, um einen sicheren Ablauf zu gewährleisten. Folgender Ablauf kann als sogenannter SEMI-STOP vorgesehen sein:
- Taste AutoRetour wird an der Ladebrückensteuerung gedrückt
- Ladebrücke fährt selbsttätig in Grundstellung zurück
- Ladebrückensteuerung sendet anschließend ZU-Fahrbefehl an Torsteuerung
- Tor erreicht Endlage unten (... Dichtung aus, Ampel außen verzögert grün)

Mit den zuvor beschriebenen Maßnahmen kann der Verlust von Energie und Zeit verringert werden, da die Offenzeit, also die Zeit welche die Öffnung zur Verladehalle tatsächlich geöffnet ist, verringert werden kann. Wenn eine Torposition oberhalb der Ladebrückenmaximalverstellhöhe als Freigabeposition genommen wird, so kann dies immer noch zu Energieverlusten führen; allerdings kann eine derartige Ausführung aus zeitlicher und sicherheitsrelevanter Sicht die Ladebrückenanordnung verbessern. Besonders bevorzugt wird die Toreinrichtung derart gesteuert, dass diese während des Schließvorgangs/Öffnungsvorgangs an der Ladebrückenanordnung anliegt, so dass kaum Energie entweichen kann.

Es sollte beachtet werden, dass die nachfolgende Beschreibung die Erfindungsidee zwar lediglich anhand einer Ladebrücke mit Ladelippe näher erläutert. Allerdings können die hierin beschriebenen Ideen grundsätzlich auch bei anderen Ladebrückenarten, wie beispielsweise Klappkeilladebrücken, einfachen Ladebrücken ohne Ladelippe oder Klappkeil, oder anderen Bauarten verwendet werden.

Ausführungsbeispiele werden nachfolgend anhand der Zeichnungen näher erläutert. Darin zeigt:
- Fig. 1: ein Ausführungsbeispiel einer Ladebrückenanordnung;
- Fig. 2: ein Ausführungsbeispiel einer Benutzerschnittstelle;
- Fig. 3 bis Fig. 5: ein Ausführungsbeispiel eines Öffnungsvorgangs; sowie
- Fig. 6 und Fig. 7: ein Ausführungsbeispiel eines Schließvorgangs.

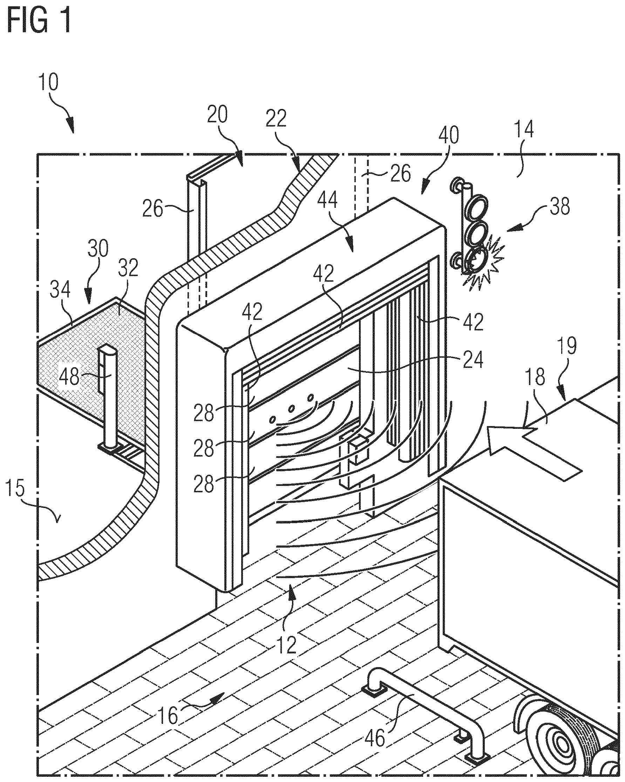

Es wird zunächst auf Fig. 1 Bezug genommen, die ein Ausführungsbeispiel einer Ladebrückenanordnung 10 zeigt. Die Ladebrückenanordnung 10 ist an einer Gebäudeöffnung 12 eines Gebäudes 14 angeordnet.

Die Ladebrückenanordnung 10 bildet ein Ladedock 16 für einen Lastkraftwagen 18.

Die Ladebrückenanordnung 10 umfasst eine Toreinrichtung 20. Die Toreinrichtung 20 ist zwischen einer Schließstellung und einer Offenstellung mittels einer Torantriebseinrichtung 21 bewegbar. Die Toreinrichtung 20 kann beispielsweise als Sektionaltoreinrichtung 22 ausgebildet sein.

Die Toreinrichtung 20 umfasst ein Torblatt 24, dass in einem Paar Führungsschienen 26 beweglich gelagert ist. Das Torblatt 24 kann eine Mehrzahl von Torblattpaneelen 28 aufweisen, die gelenkig aneinander befestigt sind, um das Torblatt 24 zu bilden.

Die Ladebrückenanordnung 10 umfasst ferner eine Ladebrückeneirichtung 30. Die Ladebrückeneinrichtung 30 umfasst eine bewegbare Ladebrücke 32. Die Ladebrücke 32 ist vorzugsweise in einem Ladebrückenrahmen 34 beweglich gelagert, der in den Gebäudeboden 15 des Gebäudes 14 eingelassen ist.

Die Ladebrücke 32 weist eine Grundstellung auf, in der die Ladebrücke 32 im Wesentlichen bündig mit dem Gebäudeboden 15 ausgerichtet ist. Ferner weist die Ladebrücke 32 eine Ladebrückenmaximalverstellhöhe auf, in der die Ladebrücke 32 den maximalen Winkel in Richtung nach oben relativ zu dem Gebäudeboden 15 aufweist. Ferner kann die Ladebrücke 32 auch eine Ladebrückenminimalverstellhöhe aufweisen, in der die Ladebrücke 32 den größten Winkel unterhalb der Bodenebene relativ zu dem Gebäudeboden 15 einnimmt.

Die Ladebrückeneinrichtung 30 umfasst ferner eine Ladelippe 36, die aus der Ladebrücke 32 in Richtung auf die Gebäudeöffnung 12 ausfahrbar ist. Ladelippe 36 kann auch als Vorschub bezeichnet werden. Es sollte beachtet werden, dass die Ladebrückeneinrichtung 30 lediglich als Beispiel für Ladebrückeneinrichtungen dient. Beispielsweise kann die Ladebrückeneinrichtung 30 auch als Klappkeilladebrücke ausgebildet sein. In diesem Fall ist anstelle der Ladelippe 36 ein Klappkeil vorgesehen. Der Einfachheit halber wird auch der Klappkeil als Beispiel für den Vorschub angesehen. Auch eine Ladebrückeneinrichtung ohne die Ladelippe 36 oder den Klappkeil sind grundsätzlich denkbar.

Die Ladebrückenanordnung 10 kann zudem eine Statusanzeigeeinrichtung 38 aufweisen, die an der Außenwand des Gebäudes 14 angeordnet ist, um dem Fahrer des Lastkraftwagens 18 den momentanen Status der Ladebrückenanordnung 10 anzuzeigen.

Die Ladebrückenanordnung 10 kann eine Ladebrückenanordnung-Dichtungseinrichtung 40 aufweisen. Die Ladebrückenanordnung-Dichtungseinrichtung 40 ist ausgebildet, einen Spalt zwischen dem Ladeende 19 des Lastkraftwagens 18 und der Umgebung abzudichten.

Die Ladebrückenanordnung-Dichtungseinrichtung 40 umfasst eine Mehrzahl von Dichtungselementen 42. Die Dichtungselemente 42 sind vorzugsweise aufblasbar ausgestaltet. Die Dichtungselemente 42 sind vorzugsweise an den Seiten und oberhalb angeordnet. Weiter vorzugsweise umfasst die Ladebrückenanordnung-Dichtungseinrichtung 40 eine Einhausung 44, die an der Außenwand des Gebäudes 14 angeordnet ist. Vorzugsweise sind die Dichtungselemente 42 an der Einhausung 44 angeordnet. Die Dichtungselemente 42 sind insbesondere durch die Einhausung 44 von der Gebäudeöffnung 12 senkrecht zu der Außenwand des Gebäudes 14 beabstandet.

Ferner kann die Ladebrückenanordnung 10 eine Einfahrhilfe 46 für den Lastkraftwagen 18 aufweisen. Auch kann die Ladebrückenanordnung 10 eine Halteeinrichtung 48 für Türen des Lastkraftwagens 18 umfassen.

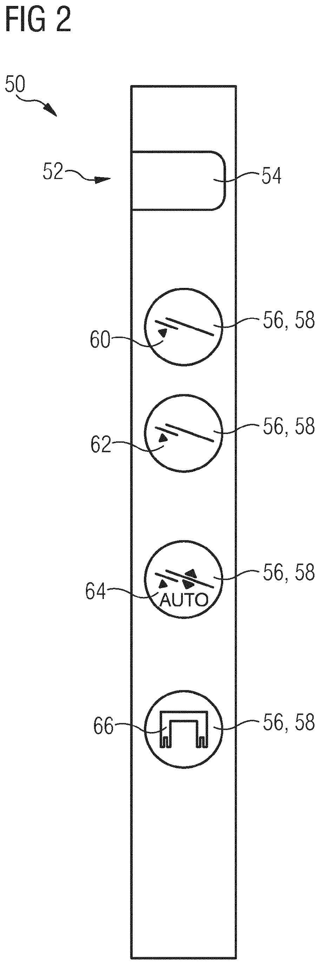

Mit Bezug auf Fig. 2 wird eine Steuereinrichtung 50 zum Steuern der Ladebrückenanordnung 10 näher erläutert.

Es sollte beachtet werden, dass die Steuereinrichtung 50 nicht ein einziges Modul oder Gerät sein muss. Die Steuereinrichtung 50 kann auch auf mehrere Vorrichtungen aufgeteilt sein. Beispielsweise kann die Steuereinrichtung 50 eine separate Toreinrichtungssteuereinrichtung und/oder eine separate Ladebrückeneinrichtungssteuereinrichtung umfassen, mit denen die Steuereinrichtung in Wirkverbindung steht.

Die Steuereinrichtung 50 weist eine Benutzerschnittstelle 52 auf, die durch einen Nutzer 53 bedient werden kann. Die Benutzerschnittstelle 52 kann eine Anzeigeeinheit 54 aufweisen.

Ferner umfasst die Benutzerschnittstelle 52 eine Mehrzahl von Bedienelementen 56, die beispielsweise als Bedientaster 58, insbesondere auf Folienbasis, ausgebildet sein können.

Die Benutzerschnittstelle 52 umfasst ein erstes und ein zweites Ladelippenbedienelement 60, 62. Das Ladelippenbedienelement 60 veranlasst beim Betätigen das Herausfahren der Ladelippe 36 aus der Ladebrücke 32, während das Ladelippenbedienelement 62 beim Betätigen das Hereinfahren der Ladelippe 36 in die Ladebrücke 32 veranlassen kann. Bei einer Benutzerschnittstelle für eine Klappkeilbrücke oder auch andere Bauarten können die Ladelippenbedienelemente 60, 62 fehlen.

Ferner umfasst die Benutzerschnittstelle 52 ein AutoRetour-Bedienelement 64, dessen Funktion später noch näher erläutert wird. Zudem kann die Benutzerschnittstelle 52 ein Dichtungsbedienelement 66 umfassen.

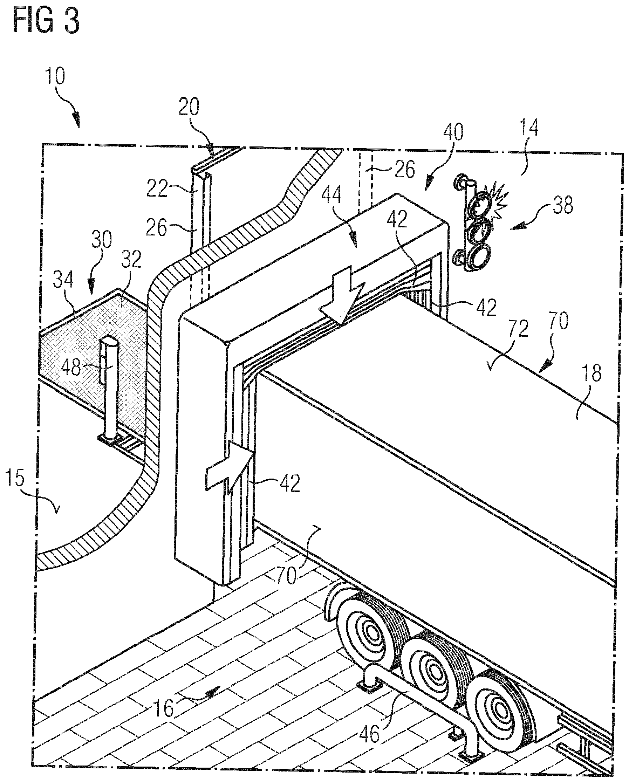

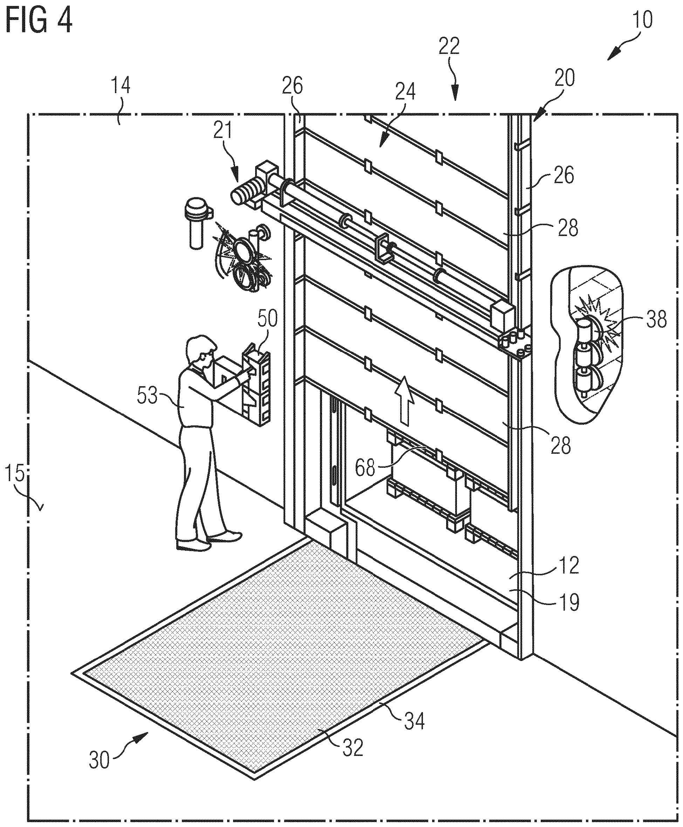

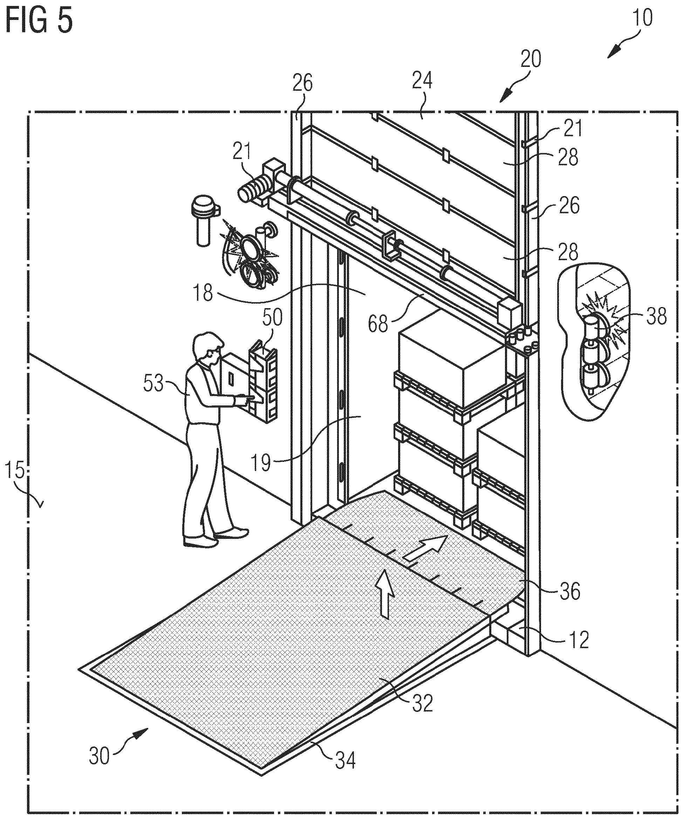

Es wird nachfolgend auf die Figs. 3 bis 5 Bezug genommen, anhand derer ein Ausführungsbeispiel eines Betriebsverfahrens am Beginn eines Ladevorgangs näher erläutert wird.

Nachdem der Lastkraftwagen 18 in die Ladebrückenanordnung-Dichtungseinrichtung 40 gegebenenfalls unter Zuhilfenahme der Einfahrhilfe 46 positioniert wurde, kann der Nutzer 53 das Dichtungsbedienelement 66 betätigen, um ein Bediensignal an die Steuereinrichtung 50 zu übermitteln. Das Bediensignal dient hier als Öffnungssignal zum Einleiten eines Öffnungsvorgangs.

Als Reaktion auf den Empfang des Bediensignales kann die Steuereinrichtung 50 zunächst das Aktivieren der Ladebrückenanordnung-Dichtungseinrichtung 40 veranlassen. Beim Aktivieren der Ladebrückenanordnung-Dichtungseinrichtung 40 werden die Dichtungselemente 42 aufgeblasen, so dass sich die Dichtungselemente 42 an die Seitenflächen 70 und die Dachfläche 72 des Lastkraftwagens 18 anlegen. Zusätzlich kann die Statusanzeigeeinrichtung 38 auf "rot" schalten, um dem Fahrer des Lastkraftwagens 18 anzuzeigen, dass der Lastkraftwagen 18 nicht mehr bewegt werden soll. Möglich ist auch eine automatische Erkennung des positionierten Lastkraftwagens 18 und als Reaktion darauf, kann die Steuereinrichtung 50 das Aktivieren der Ladebrückenanordnung-Dichtungseinrichtung 40 veranlassen. Statt dem Dichtungsbedienelement 66 kann dann ein anderes, hier nicht näher dargestelltes, Torbedienelement verwendet werden.

Zudem veranlasst die Steuereinrichtung 50 als Reaktion auf das Bediensignal, dass die Toreinrichtung 20 sich in Richtung Offenstellung bewegt. Die Toreinrichtung 20 umfasst ein an sich bekanntes Torblattpositionserfassungsmodul, mit dem die Momentan-Torblattposition, insbesondere die Absolutposition der Torblatthauptschließkante 68, ermittelt werden kann. Die ermittelte Momentan-Torblattposition wird von der Steuereinrichtung 50 ausgewertet.

Die Steuereinrichtung 50 vergleicht die Momentan-Torblattposition mit der Ladebrückenmaximalverstellhöhe. Bestimmt die Steuereinrichtung 50, dass die Momentan-Torblattposition die Ladebrückenmaximalverstellhöhe erreicht hat oder überschritten hat, so gibt die Steuereinrichtung 50 die manuelle Bedienung der Ladebrückeneinrichtung 30 durch den Nutzer 53 frei. Die Bedienung kann dann beispielsweise mittels der Benutzerschnittstelle 52 erfolgen.

Die Steuereinrichtung 50 kann zunächst nur die Ladebrücke 32 freigeben, so dass diese angehoben oder abgesenkt werden kann, während die Ladelippe 36 weiter an einem Ausfahren gehindert ist. In diesem Fall kann die Steuereinrichtung 50 die Ladelippe 36 zum Ausfahren freigeben, wenn die Momentan-Torblattposition eine Mindestöffnungshöhe erreicht hat oder überschritten hat, die mehr beträgt als die Ladebrückenmaximalverstellhöhe und insbesondere weniger als die Öffnungshöhe in der Offenstellung.

Die Mindestöffnungshöhe ist bevorzugt so gewählt, dass der Nutzer 53 von seinem Standort beim Bedienen einen ungehinderten Blick auf die Gebäudeöffnung 12 und das Ladeende 19 hat.

Insgesamt kann gemäß dem zuvor beschriebenen Verfahren die Ladebrücke 32 bereits angehoben werden, wenn die Toreinrichtung 20 noch nicht vollständig geöffnet ist. Gleichzeitig verhindert das Verfahren, dass die Ladebrücke 32 mit dem Torblatt 24 kollidiert, wobei auch ein ausreichender Schutz für Personen in der Nähe verwirklicht werden kann. Insgesamt kann mit den hierin beschriebenen Maßnahmen der Ladevorgang früher begonnen werden, da zu dem Zeitpunkt, an dem die Toreinrichtung 20 vollständig geöffnet ist, die Ladebrückeneinrichtung 30 bzw. die Ladebrücke 32 in Verbindung mit der Ladelippe 36 sich bereits in der Ladeposition für den Lastkraftwagen 18 befinden können.

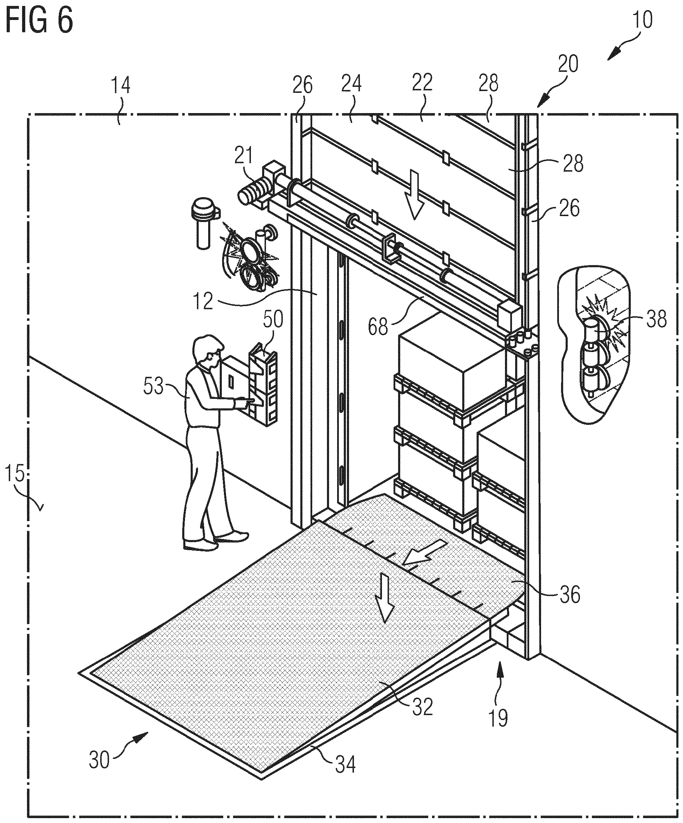

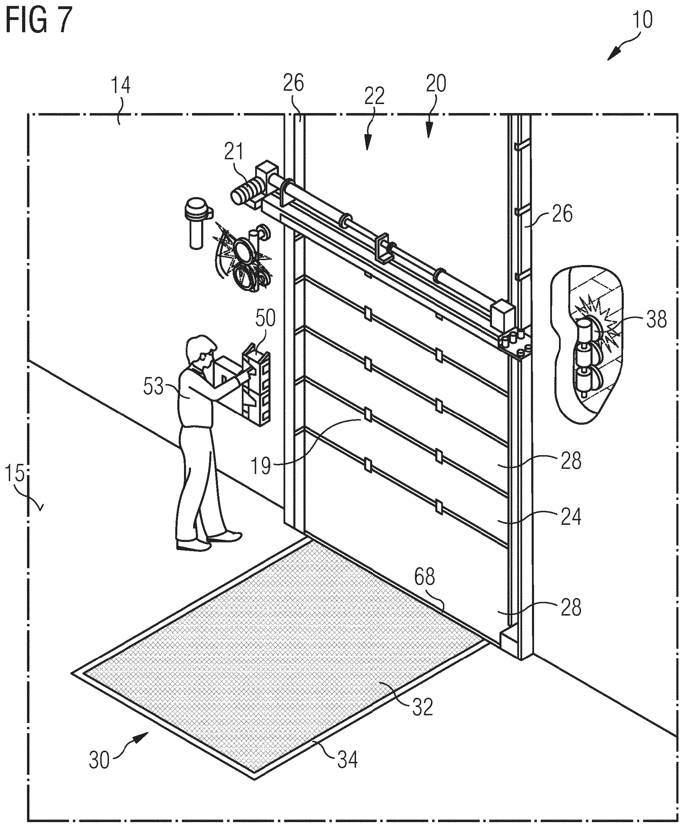

Es wird nachfolgend auf die Figs. 6 und 7 Bezug genommen, anhand derer ein Betriebsverfahren zum Schließen näher erläutert wird.

Nach Beendigung des Ladevorgangs des Lastkraftwagens 18 kann der Nutzer 53 beispielsweise das AutoRetour-Bedienelement 64 betätigen, um ein Schließsignal als Bediensignal an die Steuereinrichtung 50 zu übermitteln.

Als Reaktion auf das Bediensignal, veranlasst die Steuereinrichtung 50 die Ladebrückeneinrichtung 30 in die Grundstellung zu fahren. Sofern erforderlich, wird zunächst die Ladelippe 36 in die Ladebrücke 32 eingefahren. Sodann veranlasst die Steuereinrichtung 50 die Ladebrücke 32, in die Grundstellung zu fahren, so dass die Ladebrücke 32 bündig mit dem Boden 15 ist.

Bei Beginn des Fahrens der Ladebrückeneinrichtung 30 in die Grundstellung sendet die Ladebrückeneinrichtung ein entsprechendes Informationssignal an die Steuereinrichtung 50, welche als Reaktion auf das Informationssignal von der Toreinrichtung 20 eine Schließvorgang-Torlaufzeit erfragt, die angibt, wie lange das Torblatt 24 von der Momentan-Torblattposition bis in die Schließstellung benötigt.

Die Toreinrichtung 20 kann die Schließvorgang-Torlaufzeit beispielsweise basierend auf der Momentan-Torblattposition und der Durchschnittsgeschwindigkeit des Torblattes 24 ermitteln. Denkbar ist auch, dass die Toreinrichtung 20 ein zuvor eingelerntes Torblattgeschwindigkeitsprofil bei dem Ermitteln der Schließvorgang-Torlaufzeit berücksichtigt.

Basierend auf der ermittelten Schließvorgang-Torlaufzeit veranlasst die Steuereinrichtung 50, die Toreinrichtung 20 das Torblatt 24 in Richtung auf die Schließstellung zu fahren und zwar derart, dass die Toreinrichtung 20 die Schließstellung frühestens erreicht, wenn die Ladebrückeneinrichtung 30 die Grundstellung soeben erreicht oder bereits erreicht hat.

Insbesondere wird die Bewegungsgeschwindigkeit derart gesteuert, dass das Torblatt 24 mit der Ladebrückeneinrichtung 30 nicht kollidiert. Die Bewegungsgeschwindigkeit des Torblatts 24 kann somit größer sein als die Bewegungsgeschwindigkeit der Ladebrückeneinrichtung 30.

Alternativ kann die Steuereinrichtung 50 die Toreinrichtung 20 auch derart steuern, dass die Bewegungsgeschwindigkeit des Torblatts 24 beim Schließen die Bewegungsgeschwindigkeit der Ladebrückeneinrichtung 30 beim Bewegen in die Grundstellung nicht überschreitet.

Es kann auch eine Geschwindigkeitsregelung des Torblatts 24 durch die Steuereinrichtung 50 dahingehend erfolgen, dass das Torblatt 24 zumindest in dem Höhenbereich unterhalb der Ladebrückenmaximalverstellhöhe an der Ladebrückeneinrichtung 30 bzw. der Ladebrücke 32 anliegt.

Folglich erreicht die Toreinrichtung 20 ihre Schließstellung entweder gleichzeitig, wenn die Ladebrückeneinrichtung 30 die Grundstellung erreicht oder kurz danach.

Ferner kann die Steuereinrichtung 50 derart ausgebildet sein, dass als Reaktion auf das Erreichen der Grundstellung durch die Ladebrückeneinrichtung 30 und/oder als Reaktion auf das Erreichen der Schließstellung durch die Toreinrichtung 20 die Ladebrückenanordnung-Dichtungseinrichtung 40 deaktiviert wird. Beim Deaktivieren der Ladebrückenanordnung-Dichtungseinrichtung 40 werden die Dichtungselemente 42 entlüftet.

Vorzugsweise kann wiederum als Reaktion und insbesondere nach einer vorgegebenen Verzögerungszeit die Statusanzeigeeinrichtung 38 auf "grün" geschaltet werden, um dem Fahrer des Lastkraftwagens 18 zu signalisieren, dass ein Wegfahren von der Ladebrückenanordnung 10 möglich ist.

Die zuvor beschriebene intelligente Tor- und Ladebrückensteuerung (als Kombination oder auch einzeln) kann per Datenaustausch insofern kommunizieren, dass eine Verbesserung der Abläufe erreicht werden kann.

Eine Idee ist der folgende Ablauf SEMI-START für Energie- und Zeitersparnis am Ladedock:
- Taste Dichtung wird an der Ladebrückensteuerung gedrückt
- Torabdichtung bläst auf und Ladebrückensteuerung sendet verzögert AUF-Fahrbefehl ans Tor
- Torsteuerung überwacht eigene IST-Position während Öffnung
- Torsteuerung gibt bereits die Freigabe an die Ladebrücke, wenn das Tor die "maximale Verstellhöhe" der Ladebrücke (z.B. 600 mm) erreicht hat
- Die Ladebrücke kann also schneller von Hand verfahren werden

Es sollte beachtet werden, dass beim Herausfahren der Ladebrücke freie Sicht zum LKW gegeben ist, um das Verletzungsrisiko zu senken. Insofern kann dafür gesorgt werden, dass das Tor schon eine Höhe von etwa 2000 mm erreicht hat, wenn die Ladebrücke sich herausbewegt. Eine Möglichkeit ist ein hinreichend schneller Antrieb des Tores, so dass das Tor für die Öffnung zwischen 600 mm und 2000 mm höchstens so viel Zeit benötigt, wie das kurze Anheben der Ladebrücke, das notwendig ist, um die Ladebrücke danach herauszufahren.

Eine weitere Idee ist der folgende Ablauf SEMI-STOP für Energie- und Zeitersparnis am Ladedock:
- Taste AutoRetour wird an der Ladebrückensteuerung gedrückt
- Ladebrücke beginnt Fahrt in Grundstellung und gibt Info an Torsteuerung
- Torsteuerung berechnet Tor-Laufzeit für den kompletten Schließvorgang
- Torsteuerung startet Schließvorgang automatisch, um kurz nach Erreichen der Ladebrückengrundstellung in Endlage unten anzukommen

Vorteilhaft kann Energie gespart werden, da die Hallenöffnung schneller wieder komplett geschlossen ist. Zudem kann Zeit gespart werden, weil weitere Schritte (bspw. Dichtung aus / Ampel verz. grün) ebenfalls zügiger ausgeführt werden können. Die Lösung kann bei den intelligenten Steuerungen in Software programmiert werden. Zudem kann mit den vorbeschriebenen Maßnahmen Sensorik eingespart werden, wobei das Sicherheitsniveau allerdings erhalten bleibt. Durch die verkleinerte Sensorik können weitere Bauteile, wie beispielsweise Anschlussklemmen, Platinenmaterial, Verschraubungen und Gehäuse eingespart werden.

Ferner können durch die verringerte Sensorik der Montageaufwand, die Fehlerquellen und auch der Wartungsaufwand (Support) aufgrund defekter Sensoren, lose Halterungen und falsche Anschlüsse verringert werden. Zudem verkleinert sich der Bauraum und das Gewicht, so dass die Steuerung entsprechend vielfältiger eingesetzt werden kann.

### Bezugszeichenliste:

- 10: Ladebrückenanordnung
- 12: Gebäudeöffnung
- 14: Gebäude
- 15: Gebäudeboden
- 16: Ladedock
- 18: Lastkraftwagen
- 19: Ladeende
- 20: Toreinrichtung
- 21: Torantreibseinrichtung
- 22: Sektionaltoreinrichtung
- 24: Torblatt
- 26: Führungsschiene
- 28: Torblattpaneel
- 30: Ladebrückeneinrichtung
- 32: Ladebrücke
- 34: Ladebrückenrahmen
- 36: Ladelippe
- 38: Statusanzeigeeinrichtung
- 40: Ladebrückenanordnung-Dichtungseinrichtung
- 42: Dichtungselement
- 44: Einhausung
- 46: Einfahrhilfe
- 48: Halteeinrichtung
- 50: Steuereinrichtung
- 52: Benutzerschnittstelle
- 53: Nutzer
- 54: Anzeigeeinheit
- 56: Bedienelement
- 58: Bedientaster
- 60: Ladelippenbedienelement
- 62: Ladelippenbedienelement
- 64: AutoRetour-Bedienelement
- 66: Dichtungs-Bedienelement
- 68: Torblatthauptschließkante
- 70: Seitenfläche
- 72: Dachfläche

## Patentansprüche

1. Betriebsverfahren zum Betreiben einer Ladebrückenanordnung (10), wobei die Ladebrückenanordnung (10) eine Steuereinrichtung (50), eine zwischen einer Schließstellung und einer Offenstellung bewegbare Toreinrichtung (20) und eine Grundstellung und eine Ladebrückenmaximalverstellhöhe aufweisende Ladebrückeneinrichtung (30) aufweist, wobei in Abhängigkeit von einem von der Steuereinrichtung (50) empfangenen ersten Betätigungssignal eine erste Gruppe von Schritten durchgeführt wird, wobei in Abhängigkeit von einem von der Steuereinrichtung (50) empfangenen zweiten Betätigungssignal, die Toreinrichtung (20) in Richtung der Offenstellung zu fahren, eine zweite Gruppe von Schritten durchgeführt wird, wobei die erste Gruppe folgende Schritte umfasst:
aa) Ansteuern der Ladebrückeneinrichtung (30) durch die Steuereinrichtung (50) als Reaktion auf das erste Betätigungssignal, die Ladebrückeneinrichtung (32) in Richtung der Grundstellung zu fahren;
ab) Ermitteln einer Schließvorgang-Torlaufzeit durch die Toreinrichtung (20) für den Schließvorgang der Toreinrichtung (20);
ac) Ansteuern der Toreinrichtung (20) durch die Steuereinrichtung (50) basierend auf der ermittelten Schließvorgang-Torlaufzeit derart, dass die Toreinrichtung (20) in Richtung der Schließstellung fährt und die Schließstellung frühestens erreicht, wenn die Ladebrückeneinrichtung (30) die Grundstellung erreicht oder erreicht hat;
wobei die zweite Gruppe folgende Schritte umfasst:
ba) Ansteuern der Toreinrichtung (20) durch die Steuereinrichtung (50) als Reaktion auf das zweite Betätigungssignal, die Toreinrichtung (20) in Richtung der Offenstellung zu fahren;
bb) Ermitteln der Momentan-Torblattposition durch die Toreinrichtung (20) und Freigeben der Ladebrückeneinrichtung (30) zur manuellen Steuerung durch die Steuereinrichtung (50), wenn die ermittelte Momentan-Torblattposition die Ladebrückenmaximalverstellhöhe erreicht hat oder überschritten hat.

2. Betriebsverfahren nach einem der vorhergehenden Ansprüche, **dadurch gekennzeichnet, dass** die erste Gruppe von Schritten als Reaktion auf ein Schließsignal als erstes Betätigungssignal durchgeführt wird und/oder dass die zweite Gruppe von Schritten als Reaktion auf ein Öffnungssignal als zweites Betätigungssignal durchgeführt wird.

3. Betriebsverfahren nach einem der vorhergehenden Ansprüche, **dadurch gekennzeichnet, dass** die Ladebrückeneinrichtung (30) ein Informationssignal, das angibt, dass die Ladebrückeneinrichtung (30) in die Grundstellung fährt, an die Steuereinrichtung (50) übermittelt, woraufhin die Steuereinrichtung (50) als Reaktion auf das Informationssignal den Schritt ab) veranlasst.

4. Betriebsverfahren nach einem der vorhergehenden Ansprüche, **dadurch gekennzeichnet, dass** Schritt ab) umfasst, dass die Toreinrichtung (20) eine Momentan-Torblattposition ermittelt und basierend auf der Momentan-Torblattposition und/oder basierend auf einem, insbesondere eingelernten, Torblattgeschwindigkeitsprofil die Schließvorgang-Torlaufzeit ermittelt.

5. Betriebsverfahren nach einem der vorhergehenden Ansprüche, **dadurch gekennzeichnet, dass** Schritt ac) umfasst, dass die Steuereinrichtung (50) die Toreinrichtung (20) derart ansteuert, dass die Toreinrichtung (20) die Schließstellung frühestens erreicht, wenn die ermittelte Schließvorgang-Torlaufzeit abzüglich der Maximalfahrzeit, welche die Fahrzeit der Ladebrückeneinrichtung (30) von der Ladebrückenmaximalverstellhöhe und/oder einer Ladebrückenminimalverstellhöhe in die Grundstellung angibt, verstrichen ist.

6. Betriebsverfahren nach einem der vorhergehenden Ansprüche, **dadurch gekennzeichnet, dass** Schritt ac) umfasst, dass die Steuereinrichtung (50) die Toreinrichtung (20) derart ansteuert, dass die Bewegungsgeschwindigkeit des Torblatts (24) beim Schließen die Bewegungsgeschwindigkeit der Ladebrückeneinrichtung (30) beim Bewegen in die Grundstellung nicht derart überschreitet, dass das Torblatt (24) mit der Ladebrückeneinrichtung (30) kollidiert, insbesondere wenn die Momentan-Torblattposition kleiner oder gleich der Ladebrückenmaximalverstellhöhe ist und/oder die Bewegungsrichtung der Ladebrückeneinrichtung (30) parallel zu der Bewegungsrichtung des Torblatts (24) ist.

7. Betriebsverfahren nach einem der vorhergehenden Ansprüche, **dadurch gekennzeichnet, dass** Schritt ac) umfasst, dass die Steuereinrichtung (50) die Toreinrichtung (20) derart ansteuert, dass die Bewegungsgeschwindigkeit des Torblatts (24) beim Schließen größer oder gleich der Bewegungsgeschwindigkeit der Ladebrückeneinrichtung (30) beim Bewegen in die Grundstellung ist, insbesondere auch dann, wenn die Momentan-Torblattposition kleiner oder gleich der Ladebrückenmaximalverstellhöhe ist und/oder die Bewegungsrichtung der Ladebrückeneinrichtung (30) parallel zu der Bewegungsrichtung des Torblatts (24) ist.

8. Betriebsverfahren nach einem der vorhergehenden Ansprüche, **gekennzeichnet durch** den Schritt ad), bei dem als Reaktion auf das Erreichen der Grundstellung und/oder der Schließstellung, und/oder mit Erreichen der Grundstellung und/oder der Schließstellung, eine Ladebrückenanordnung-Dichtungseinrichtung (40) deaktiviert wird.

9. Betriebsverfahren nach einem der vorhergehenden Ansprüche, **dadurch gekennzeichnet, dass** der Schritt ba) umfasst, dass als unmittelbare Reaktion auf das zweite Betätigungssignal eine Ladebrückenanordnung-Dichtungseinrichtung (40) aktiviert wird, wobei insbesondere nach einer vorgegebenen Verzögerung und/oder insbesondere durch die Steuereinrichtung (50) die Toreinrichtung (20) veranlasst wird, in Richtung der Offenstellung zu fahren.

10. Betriebsverfahren nach einem der vorhergehenden Ansprüche, **dadurch gekennzeichnet, dass** der Schritt bb) umfasst, dass die Ladebrückeneinrichtung (30), insbesondere lediglich, zum Anheben freigegeben wird, wenn die ermittelte Momentan-Torblattposition die Ladebrückenmaximalverstellhöhe erreicht hat oder überschritten hat.

11. Betriebsverfahren nach einem der vorhergehenden Ansprüche, **dadurch gekennzeichnet, dass** der Schritt bb) umfasst, dass die Ladebrückeneinrichtung (30), insbesondere zusätzlich zum Anheben, zum Ausfahren freigegeben wird, wenn die ermittelte Momentan-Torblattposition eine Mindestöffnungshöhe erreicht hat oder überschritten hat, wobei die Mindestöffnungshöhe derart gewählt ist, dass ein aufrechtstehender Nutzer (53) freie Sicht durch die Toreinrichtung (20) auf ein Ladeende (19) hat..

12. Ladebrückenanordnung (10) zum Bereitstellen eines Ladedocks (16) für ein Kraftfahrzeug an einem Gebäude (14), wobei die Ladebrückenanordnung (10) umfasst:
- eine zwischen einer Schließstellung und einer Offenstellung bewegbaren Toreinrichtung (20), wobei die Toreinrichtung (20) ein Torblattpositionserfassungsmodul, mit dem die Momentan-Torblattposition ermittelt werden kann, umfasst,
- eine eine Grundstellung und eine Ladebrückenmaximalverstellhöhe aufweisende Ladebrückeneinrichtung (30),
- eine Steuereinrichtung (50) zum Steuern der Toreinrichtung (20) und der Ladebrückeneinrichtung (30),
- einen durch einen Nutzer bedienbaren Benutzerschnittstelle (52) zum Übermitteln von Betätigungssignalen an die Steuereinrichtung (50),wobei die Steuereinrichtung (50) ausgebildet ist, ein Betriebsverfahren nach einem der Ansprüche 1 bis 11 durchzuführen.

## Claims

1. Operating method for operating a loading bridge arrangement (10), the loading bridge arrangement (10) comprising a control device (50), a gate device (20) movable between a closed position and an open position, and loading bridge device (30) having a home position and a loading bridge maximum adjustment height, wherein a first group of steps is carried out in dependence on a first actuation signal received from the control device (50), wherein a second group of steps is carried out in dependence on a second actuation signal received from the control device (50) to move the gate device (20) in the direction of the open position, wherein the first group comprises the following steps:
aa) controlling the loading bridge device (30) by the control device (50) in response to the first actuation signal to drive the loading bridge device (32) toward the home position;
ab) determining a closing operation gate travel time by the gate device (20) for the closing operation of the gate device (20);
ac) controlling the gate device (20) by the control device (50) based on the determined closing operation gate travel time in such a way that the gate device (20) moves in the direction of the closed position and reaches the closed position at the earliest when the loading bridge device (30) reaches or has reached the home position;
wherein the second group comprises the following steps:
ba) controlling the gate device (20) by the control device (50) in response to the second actuation signal to drive the gate device (20) toward the open position;
bb) determining the instantaneous gate leaf position by the gate device (20) and releasing the loading bridge device (30) for manual control by the control device (50) when the determined instantaneous gate leaf position has reached or exceeded the loading bridge maximum adjustment height.

2. Operating method according to any of the preceding claims, **characterized in that** the first group of steps is performed in response to a closing signal as a first actuating signal and/or that the second group of steps is performed in response to an opening signal as a second actuating signal.

3. Operating method according to any of the preceding claims, **characterized in that** the loading bridge device (30) transmits an information signal indicating that the loading bridge device (30) is moving to the home position to the control device (50), whereupon the control device (50) initiates step ab) in response to the information signal.

4. Operating method according to any of the preceding claims, **characterized in that** step ab) comprises that the gate device (20) assumes an instantaneous gate leaf position and determines the closing operation gate travel time based on the instantaneous gate leaf position and/or based in particular on a learned gate leaf speed profile.

5. Operating method according to any of the preceding claims, **characterized in that** step ac) comprises that the control device (50) controls the gate device (20) in such a way that the gate device (20) reaches the closed position at the earliest when the determined closing operation gate time minus the maximum travel time, which indicates the travel time of the loading bridge device (30) from the loading bridge maximum adjustment height and/or a loading bridge minimum adjustment height into the home position, has elapsed.

6. Operating method according to any of the preceding claims, **characterized in that** step ac) comprises that the control device (50) controls the gate device (20) in such a way that the movement speed of the gate leaf (24) during closing does not exceed the movement speed of the loading bridge device (30) during movement into the home position in such a way, that the gate leaf (24) collides with the loading bridge device (30), in particular if the instantaneous gate leaf position is smaller than or equal to the loading bridge maximum adjustment height and/or the direction of movement of the loading bridge device (30) is parallel to the direction of movement of the gate leaf (24).

7. Operating method according to any of the preceding claims, **characterized in that** step ac) comprises that the control device (50) controls the gate device (20) in such a way that the speed of movement of the gate leaf (24) during closing is greater than or equal to the speed of movement of the loading bridge device (30) during movement into the home position, in particular also when the instantaneous gate leaf position is less than or equal to the loading bridge maximum adjustment height and/or the direction of movement of the loading bridge device (30) is parallel to the direction of movement of the gate leaf (24).

8. Operating method according to any of the preceding claims, **characterized by** step ad), in which a loading bridge arrangement sealing device (40) is deactivated in response to reaching the home position and/or closed position and/or with reaching the home position and/or closed position.

9. Operating method according to any of the preceding claims, **characterized in that** step ba) comprises activating a loading bridge arrangement sealing device (40) as a direct reaction to the second actuation signal, wherein in particular after a predetermined delay and/or in particular by the control device (50) the gate device (20) is caused to move in the direction of the open position.

10. Operating method according to any of the preceding claims, **characterized in that** step bb) comprises that the loading bridge device (30) is released, in particular, only for lifting when the determined instantaneous gate leaf position has reached or exceeded the loading bridge maximum adjustment height.

11. Operating method according to any of the preceding claims, **characterized in that** step bb) comprises that the loading bridge device (30) is in particular released for extension in addition to raising when the determined instantaneous gate leaf position has reached or exceeded a minimum opening height, the minimum opening height being selected such that an upright user (53) has a free view through the gate device (20) to a loading end (19).

12. Loading bridge arrangement (10) for providing a loading dock (16) for a motor vehicle at a building (14), the loading bridge arrangement (10) comprising:
- a gate device (20) movable between a closed position and an open position, the gate device (20) comprising a gate leaf position detection module capable of determining the instantaneous gate leaf position,
- a loading bridge device (30) having a home position and a loading bridge maximum adjustment height,
- a control device (50) for controlling the gate device (20) and the loading bridge arrangement (30)
- a user interface (52) operable by a user for transmitting actuation signals to the control device (50), wherein the control device (50) is adapted to perform an operating method according to any one of claims 1 to 11.

## Revendications

1. Procédé de fonctionnement pour faire fonctionner un système de pont de chargement (10), le système de pont de chargement (10) présentant un dispositif de commande (50), un dispositif de porte (20) mobile entre une position de fermeture et une position d'ouverture et un dispositif de pont de chargement (30) présentant une position de base et une hauteur de réglage maximale du pont de chargement, un premier groupe d'étapes étant effectué en fonction d'un premier signal d'actionnement reçu par le dispositif de commande (50), un deuxième groupe d'étapes étant effectué en fonction d'un deuxième signal d'actionnement reçu par le dispositif de commande (50) pour déplacer le dispositif de porte (20) en direction de la position ouverte, le premier groupe comprenant les étapes suivantes:
aa) commande du dispositif de pont de chargement (30) par le dispositif de commande (50) en réponse au premier signal d'actionnement, pour déplacer le dispositif de pont de chargement (32) en direction de la position de base;
ab) détermination par le dispositif de porte (20) d'un temps de déplacement de la porte pour l'opération de fermeture du dispositif de porte (20);
ac) commande du dispositif de porte (20) par le dispositif de commande (50) sur la base du temps de déplacement de porte pour l'opération de fermeture déterminé de telle sorte que le dispositif de porte (20) se déplace en direction de la position de fermeture et atteint la position de fermeture au plus tôt lorsque le dispositif de pont de chargement (30) atteint ou a atteint la position de base;
le deuxième groupe comprenant les étapes suivantes :
ba) commande du dispositif de porte (20) par le dispositif de commande (50) en réponse au deuxième signal d'actionnement pour déplacer le dispositif de porte (20) en direction de la position ouverte;
bb) détermination de la position instantanée du vantail de porte par le dispositif de porte (20) et libération du dispositif de pont de chargement (30) pour une commande manuelle par le dispositif de commande (50) lorsque la position instantanée déterminée du vantail de porte a atteint ou dépassé la hauteur de réglage maximale du pont de chargement.

2. Procédé de fonctionnement selon l'une quelconque des revendications précédentes, **caractérisé en ce que** le premier groupe d'étapes est réalisé en réponse à un signal de fermeture en tant que premier signal d'actionnement et/ou **en ce que** le deuxième groupe d'étapes est réalisé en réponse à un signal d'ouverture en tant que deuxième signal d'actionnement.

3. Procédé de fonctionnement selon l'une quelconque des revendications précédentes, **caractérisé en ce que** le dispositif de pont de chargement (30) transmet au dispositif de commande (50) un signal d'information indiquant que le dispositif de pont de chargement (30) se déplace vers la position de base, après quoi le dispositif de commande (50) déclenche l'étape ab) en réponse au signal d'information.

4. Procédé de fonctionnement selon l'une quelconque des revendications précédentes, **caractérisé en ce que** l'étape ab) comprend le fait que le dispositif de porte (20) détermine une position instantanée du vantail de porte et détermine le temps de déplacement de la porte pour l'opération de fermeture sur la base de la position instantanée du vantail de porte et/ou sur la base d'un profil de vitesse du vantail de porte, en particulier obtenu par apprentissage.

5. Procédé de fonctionnement selon l'une quelconque des revendications précédentes, **caractérisé en ce que** l'étape ac) comprend le fait que le dispositif de commande (50) commande le dispositif de porte (20) de telle sorte que le dispositif de porte (20) atteint la position de fermeture au plus tôt lorsque le temps de déplacement de la porte pour l'opération de fermeture déterminé moins le temps de déplacement maximal, qui indique le temps de déplacement du dispositif de pont de chargement (30) depuis la hauteur de réglage maximale du pont de chargement et/ou une hauteur de réglage minimale du pont de chargement jusqu'à la position de base, s'est écoulé.

6. Procédé de fonctionnement selon l'une quelconque des revendications précédentes, **caractérisé en ce que** l'étape ac) comprend le fait que le dispositif de commande (50) commande le dispositif de porte (20) de telle sorte que la vitesse de déplacement du vantail de porte (24) lors de la fermeture n'excède pas la vitesse de déplacement du dispositif de pont de chargement (30) lors du déplacement vers la position initiale de telle sorte, que le vantail de porte (24) entre en collision avec le dispositif de pont de chargement (30), en particulier lorsque la position instantanée du vantail de porte est inférieure ou égale à la hauteur de réglage maximale du pont de chargement et/ou que la direction de déplacement du dispositif de pont de chargement (30) est parallèle à la direction de déplacement du vantail de porte (24).

7. Procédé de fonctionnement selon l'une quelconque des revendications précédentes, **caractérisé en ce que** l'étape ac) comprend le fait que le dispositif de commande (50) commande le dispositif de porte (20) de telle sorte que la vitesse de déplacement du ventail de porte (24) lors de la fermeture soit supérieure ou égale à la vitesse de déplacement du dispositif de pont de chargement (30) lors du déplacement vers la position initiale, notamment même si la position instantanée du vantail de porte est inférieure ou égale à la hauteur maximale de réglage du pont de chargement et/ou si la direction de déplacement du dispositif de pont de chargement (30) est parallèle à la direction de déplacement vantail de porte (24).

8. Procédé de fonctionnement selon l'une quelconque des revendications précédentes, **caractérisé par** l'étape ad) dans laquelle, en réponse à l'atteinte de la position initiale et/ou de la position fermée et/ou lorsque la position initiale et/ou la position fermée sont atteintes, un dispositif d'étanchéité (40) du système de pont de chargement est désactivé.

9. Procédé de fonctionnement selon l'une quelconque des revendications précédentes, **caractérisé en ce que** l'étape ba) comprend l'activation, en réponse immédiate au deuxième signal d'actionnement, d'un dispositif d'étanchéité (40) du système de pont de chargement, le dispositif de porte (20) étant notamment amené à se déplacer en direction de la position ouverte après un délai prédéterminé et/ou notamment par le dispositif de commande (50).

10. Procédé de fonctionnement selon l'une quelconque des revendications précédentes, **caractérisé en ce que** l'étape bb) comprend le fait de libérer le dispositif de pont de chargement (30), notamment uniquement pour le lever, lorsque la position instantanée du vantail de porte déterminée a atteint ou dépassé la hauteur maximale de réglage du quai de chargement.

11. Procédé de fonctionnement selon l'une quelconque des revendications précédentes, **caractérisé en ce que** l'étape bb) comprend le fait de libérer le dispositif de pont de chargement (30) pour le sortir, en particulier en plus du levage, lorsque la position instantanée déterminée du vantail de porte a atteint ou dépassé une hauteur d'ouverture minimale, la hauteur d'ouverture minimale étant choisie de telle sorte qu'un utilisateur (53) en position debout ait une vue libre à travers le dispositif de porte (20) sur une extrémité de chargement (19).

12. Système de pont de chargement (10) pour la mise à disposition d'un quai de chargement (16) pour un véhicule automobile sur un bâtiment (14), le système de pont de chargement (10) comprenant :
- un dispositif de porte (20) mobile entre une position de fermeture et une position d'ouverture, le dispositif de porte (20) comprenant un module de détection de la position du vantail de porte permettant de déterminer la position instantanée du vantail de porte,
- un dispositif de pont de chargement (30) présentant une position de base et une hauteur de réglage maximale du pont de chargement,
- un dispositif de commande (50) pour commander le dispositif de porte (20) et le dispositif du pont de chargement (30),
- une interface utilisateur (52) utilisable par un utilisateur pour transmettre des signaux d'actionnement au dispositif de commande (50), le dispositif de commande (50) étant adapté pour mettre en oeuvre un procédé de fonctionnement selon l'une des revendications 1 à 11.
